# EUROPÄISCHE PATENTANMELDUNG

(11) **EP 1 517 121 A2**
(43) Veröffentlichungstag der Anmeldung: **23.03.2005**
(21) Anmeldenummer: 04018911.0
(22) Anmeldetag: 10.08.2004
(51) Int. Cl.: G01D 11/16

(54) **Drehgeber**

(30) Priorität: 22.09.2003 DE 10343727
(71) Anmelder: SICK STEGMANN GmbH, 78166 Donaueschingen (DE)
(72) Erfinder: Wehrle, Rolf, 78166 Donaueschingen (DE); Siraky, Josef, 78166 Donaueschingen (DE)
(74) Vertreter: Ludewigt, Christoph

(57) **Zusammenfassung**

Ein Drehgeber zur Messung der Winkelposition einer Welle gegenüber einer Anbaufläche weist einen Geberkörper und eine drehbar in dem Geberkörper gelagerte Geberwelle (10) auf. Der Drehgeber ist drehsteif und zumindest axial federnd in einem Gehäuse (20) gelagert, welches an der Anbaufläche montiert wird. Die Geberwelle (10) wird auf die zu messende Welle aufgesteckt und mit dieser gekuppelt. An dem Gehäuse (20, 32) ist ein Arretierglied (30, 42) angeordnet, welches zwischen einer Arretierposition und einer Freigabeposition bewegbar ist. In der Arretierposition greift das Arretierglied (30, 42) an der Geberwelle (10) an und fixiert diese in dem Gehäuse (20). In der Freigabeposition kommt das Arretierglied (30, 42) außer Eingriff von der Geberwelle (10) und lässt deren federnde Beweglichkeit in dem Gehäuse (20) zu.

## Beschreibung

Die Erfindung betrifft einen Drehgeber gemäß dem Oberbegriff des Anspruchs 1.

Drehgeber dieser Gattung dienen zur Messung der Winkelposition einer Welle gegenüber einer Anbaufläche zum Beispiel zur Messung der Winkelposition einer Motorwelle gegenüber dem Motorgehäuse, an welchem der Drehgeber montiert wird. Der Drehgeber weist einen Geberkörper und eine drehbar in dem Geberkörper gelagerte Geberwelle auf. Die Geberwelle wird mit der zu messenden Welle starr gekuppelt. Die Geberwelle trägt eine Codescheibe, die in inkrementaler oder absoluter Codierung Winkelinformationen trägt. Der Geberkörper trägt eine Abtastung, die die Codierung der Codescheibe abtastet, sowie die Elektronik zur Verarbeitung der Abtastsignale.

Um Fluchtungsfehler bei der Montage des Drehgebers zu vermeiden, ist der Geberkörper über eine federnde Drehmomentstütze an der Anbaufläche angebracht. Diese Drehmomentstütze hält den Geberkörper drehsteif in Bezug auf die Anbaufläche, lässt jedoch zumindest eine axiale, vorzugsweise eine axiale und eine radiale federnde Beweglichkeit des Geberkörpers in Bezug auf die Anbaufläche zu. Ein solcher Drehgeber ist z. B. in der DE 299 08 796 U1 beschrieben.

Um den Drehgeber zu kapseln, ist es bekannt, den Drehgeber in ein Gehäuse einzuschließen. Dabei wird vorzugsweise das Gehäuse starr an der Anbaufläche montiert und der Drehgeber über die federnde Drehmomentstütze in dem Gehäuse drehsteif aber axial und radial schwimmend gelagert. Bei der Montage des Drehgebers wird der Drehgeber mit seiner Geberwelle auf die zu messende Welle aufgesteckt und an dieser festgelegt. Das Gehäuse des Gebers wird an der Anbaufläche montiert. Dabei kann das Problem auftreten, dass der Drehgeber gegen sein Gehäuse, insbesondere axial so verschoben wird, dass die Drehmomentstütze elastisch so stark verformt wird, dass ihre Rückstellkraft zu groß wird und die Drehmomentstütze axiale Bewegungen des Drehgebers nicht mehr ausreichend abfedert. Im ungünstigsten Falle kann der Drehgeber bei der Montage sogar an dem Gehäuse oder der Anbaufläche zur Anlage kommen, so dass die Abfederung durch die Drehmomentstütze vollständig außer Funktion gesetzt ist.

Der Erfindung liegt die Aufgabe zugrunde, einen Drehgeber der eingangs genannten Gattung so zu verbessern, dass die Funktionsfähigkeit der zumindest axial federnden Drehmomentstütze bei der Montage zuverlässig gewährleistet bleibt.

Diese Aufgabe wird erfindungsgemäß gelöst durch einen Drehgeber mit den Merkmalen des Anspruchs 1.

Vorteilhafte Ausführungen der Erfindung sind in den Unteransprüchen angegeben.

Erfindungsgemäß ist an dem Gehäuse des Drehgebers ein Arretierglied angeordnet, welches mit dem Drehgeber in Eingriff gebracht werden kann, um dessen Position in dem Gehäuse bei der Montage zu fixieren. Das Gehäuse kann somit an der Anbaufläche festgelegt werden. Der Drehgeber wird dabei mit seiner Geberwelle auf der zu messenden Welle positioniert, wobei die Arretierung sicherstellt, dass der Drehgeber in dem Gehäuse in einer Position gehalten wird, die die optimale Funktionsfähigkeit der Drehmomentstütze gewährleistet. In dieser Position wird der Drehgeber auf der zu messenden Welle festgelegt, vorzugsweise mittels einer Spannzange geklemmt. Nachdem das Gehäuse an der Anbaufläche montiert ist und der Drehgeber auf der zu messenden Welle befestigt ist, wird das Arretierglied in die Freigabeposition gebracht, so dass der Drehgeber gegenüber dem Gehäuse beweglich ist und die Drehmomentstütze axiale Bewegungen des Drehgebers federnd aufnehmen kann.

In einer konstruktiv einfachen Ausführung ist das Arretierglied ein schwenkbar an dem Gehäuse gelagerter Hebel, der gegen den Geber geschwenkt und mit diesem in arretierenden Eingriff gebracht werden kann. Vorzugsweise greift der Hebel hierzu in einen Einstich der Geberwelle ein, so dass deren Bewegung insbesondere in axialer Richtung blockiert ist. Zur Freigabe wird der Hebel aus der Eingriffsstellung herausgeschwenkt.

Um Fehlbedienungen bei der Montage auszuschließen, ist es zweckmäßig, dass eine Sicherung vorgesehen ist, die ausschließt, dass das Arretierglied nach Abschluss der Montage versehentlich in der Arretierposition verbleibt und die Funktion der Drehmomentstütze blockiert. In einer einfachen Ausführung weist der Deckel, der nach der Montage auf das Gehäuse aufgesetzt wird und dieses abschließt, ein Sicherungselement z. B. in Form eines Vorsprungs auf, welches entweder beim Aufsetzen des Deckels das Arretierglied zwangsweise in die Freigabeposition bewegt oder ein Aufsetzen des Deckels blockiert, solange sich das Arretierglied nicht in der Freigabeposition befindet.

Im Folgenden wird die Erfindung anhand eines in der Zeichnung dargestellten Ausführungsbeispiels näher erläutert. Es zeigen:

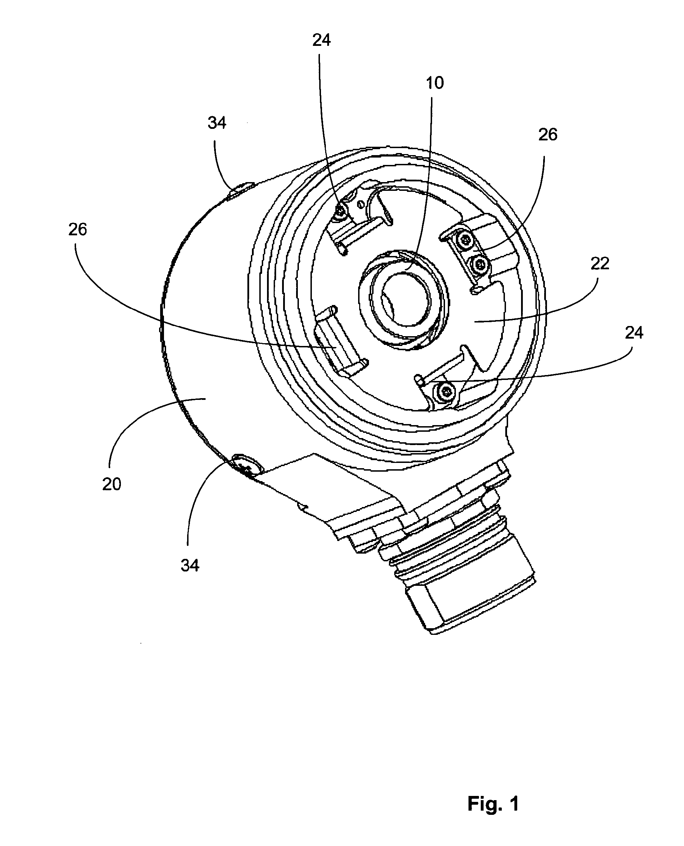

- Figur 1: eine perspektivische Vorderansicht des komplett montierten Drehgebers,
- Figur 2: eine perspektivische Rückansicht des komplett montierten Drehgebers,
- Figur 3: eine Figur 2 entsprechende Rückansicht des Drehgebers mit abgenommenem Deckel,
- Figur 4: eine Rückansicht des Drehgebers in Explosionsdarstellung,

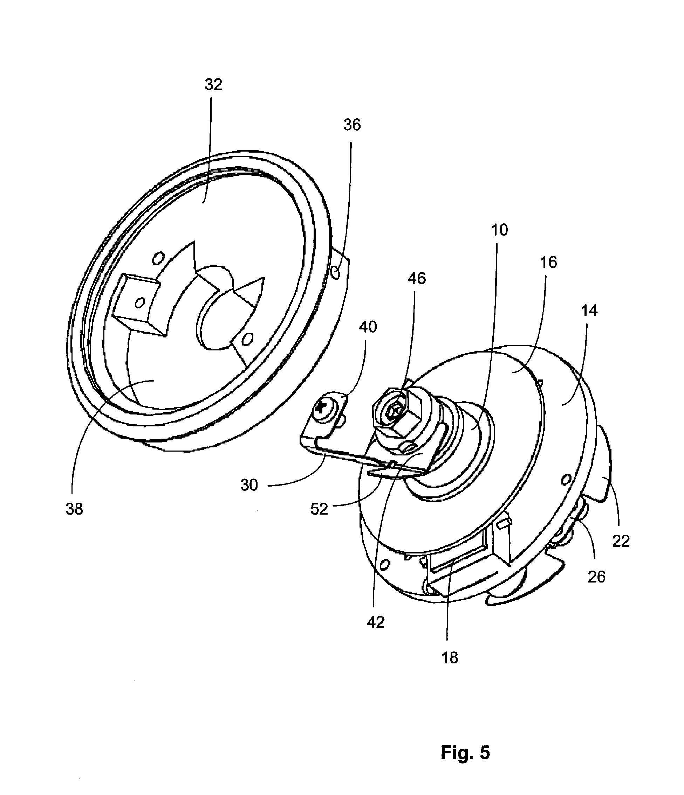

- Figur 5: eine perspektivische Teilansicht des Drehgebers und

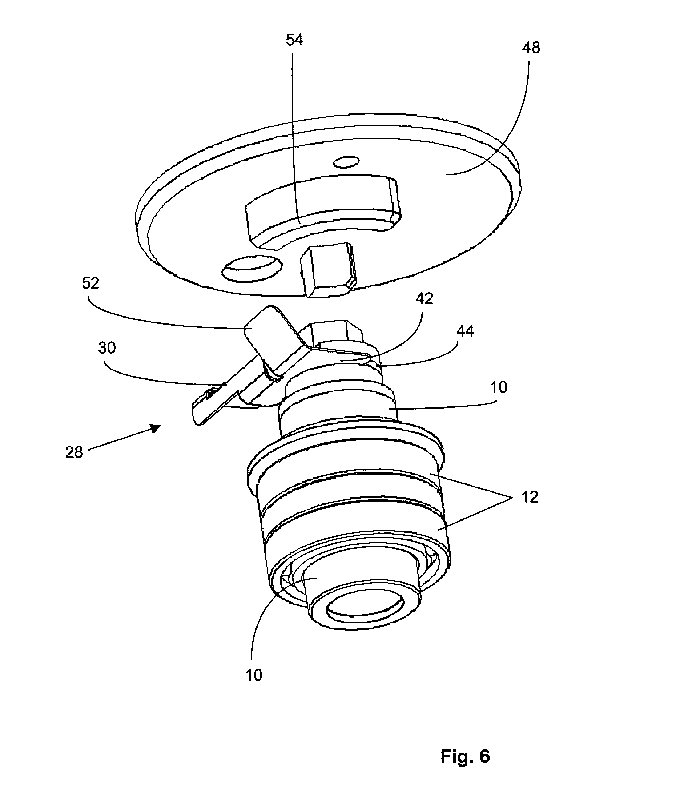

- Figur 6: eine weitere Teilansicht des Drehgebers.

Der als Ausführungsbeispiel dargestellte Drehgeber wird beispielsweise als Sensor im Regelkreis eines Servomotors verwendet. Hierzu wird der Drehgeber auf die Motorwelle aufgesteckt und an einer Anbaufläche des Motors befestigt.

Der Drehgeber weist eine Geberwelle 10 auf, die koaxial auf die in der Zeichnung nicht dargestellte Motorwelle aufgesteckt wird. Die Geberwelle 10 wird mittels einer in diese Geberwelle 10 integrierten Spannzange drehfest und axial unverschiebbar auf der Motorwelle geklemmt. Die Geberwelle 10 sitzt mittels Wälzlagern 12 drehbar und axial unverschiebbar in einem Geberkörper 14. Auf der Geberwelle 10 ist eine Codescheibe 16 angeordnet, die in an sich bekannter Weise eine Winkel-Maßverkörperung, z. B. eine inkrementale oder absolute Codierung trägt. Der Geberkörper 14 trägt eine Abtasteinrichtung zur Abtastung der Winkel-Maßverkörperung der Codescheibe 16, z. B. eine optische Abtasteinrichtung 18. Weiter trägt der Geberkörper 14 die Elektronik zur Verarbeitung und Ausgabe der mittels der Abtasteinrichtung 18 erfassten Winkelinformationen.

Der gesamte Drehgeber ist in einem Gehäuse 20 aufgenommen, welches an der Anbaufläche des Motors fest montiert wird, z. B. mit dieser Anbaufläche verschraubt wird. Um Fluchtungsfehler zwischen der Anbaufläche und dem mit dieser verbundenen Gehäuse 20 und der Motorwelle und dem auf dieser sitzenden Drehgeber aufzunehmen, ist der Geberkörper 14 mittels einer Drehmomentstütze 22 in dem Gehäuse 20 gelagert. Die Drehmomentstütze 22 wird durch ein Kreuz aus einem Federblech gebildet und weist zwei um 90° gegeneinander versetzte Paare von diametral angeordneten Federarmen auf, die aus der Ebene des Federbleches gebogen sind. Ein Paar von Federarmen 24 ist an dem Geberkörper 14 befestigt, während das andere Paar von Federarmen 26 an dem Gehäuse 20 befestigt ist. Die Drehmomentstütze 22 bewirkt eine drehsteife Verbindung zwischen dem Geberkörper 14 und dem Gehäuse 20 und somit zwischen dem Geberkörper 14 und der Anbaufläche des Motors. Andererseits lässt die Drehmomentstütze 22 aufgrund der elastischen Biegsamkeit der Federarme 24 und 26 eine axiale und radiale Bewegung des Geberkörpers 14 und damit des Drehgebers gegenüber dem Gehäuse 20 und damit gegenüber der Anbaufläche des Motors zu.

Insoweit entspricht der Drehgeber dem Stand der Technik, so dass eine detailliertere Beschreibung nicht erforderlich ist. Auch sind Abwandlungen des Drehgebers möglich, die sich im Rahmen des bekannten Standes der Technik bewegen und nicht Gegenstand der Erfindung sind.

Bei der Montage des Drehgebers an dem Motor wird der Drehgeber mit seiner Geberwelle 10 zunächst lose auf die Motorwelle aufgesteckt. Das Gehäuse 20 wird dann an der Anbaufläche des Motors befestigt. Anschließend wird die Geberwelle 10 durch die zunächst noch offene Rückseite des Gehäuses 20 auf der Motorwelle befestigt, vorzugsweise mittels einer Spannzange geklemmt. Bei dieser Befestigung kann auf die Geberwelle 10 eine axiale Kraft ausgeübt werden, die zu einer axialen Verschiebung des Geberkörpers 14 gegenüber dem Gehäuse 20 führen kann. Durch diese axiale Verschiebung des Drehgebers in dem Gehäuse 20 wird die Drehmomentstütze 22 axial ausgelenkt. Überschreitet diese axiale Auslenkung ein gewisses Maß, so kann dies entsprechend der Kennlinie der Drehmomentstütze 22 dazu führen, dass die axiale Rückstellkraft der Drehmomentstütze 22 stark ansteigt und die Drehmomentstütze 22 nicht mehr in ihrem optimalen Arbeitspunkt der Federkennlinie arbeitet. Im ungünstigsten Falle kann der Drehgeber sogar soweit axial verschoben werden, dass er an der Anbaufläche des Motors zur Anlage kommt und die axiale Abfederung durch die Drehmomentstütze 22 vollständig blockiert ist.

Umgekehrt kann beim Aufstecken der Geberwelle 10 auf die Motorwelle der Drehgeber durch die Motorwelle axial gegen die Rückseite des Gehäuses 20 hin gedrückt werden. Auch hierdurch kann die Drehmomentstütze 22 axial so stark verformt werden, dass sie nicht mehr in ihrem optimalen Arbeitspunkt der Federkennlinie wirksam ist. Im ungünstigsten Falle kann auch hier der Drehgeber an der hinteren Stirnwand des Gehäuses 20 zur Anlage kommen, wodurch die Federwirkung der Drehmomentstütze 22 vollständig blockiert ist. Um solche Justagefehler bei der Montage des Drehgebers zu verhindern, sind folgende Maßnahmen vorgesehen.

An dem Gehäuse 20 ist ein Arretierglied 28 angeordnet, welches die Position des Drehgebers in dem Gehäuse 20 für den Einbau und die Montage des Drehgebers so fixiert, dass sich die Drehmomentstütze 22 in ihrem optimalen Arbeitspunkt bezüglich ihrer axialen Federkennlinie befindet. Der Drehgeber und insbesondere seine Geberwelle 10 werden bei der Montage in der optimalen axialen Lage auf der Motorwelle fixiert gehalten, bis das Gehäuse 20 an der Anbaufläche des Motors befestigt ist und bis die Geberwelle 10 an der Motorwelle festgelegt, z. B. mittels der Spannzange festgeklemmt ist. Erst wenn die Befestigung der Geberwelle 10 auf der Motorwelle in der optimalen axialen Stellung sichergestellt ist, wird das Arretierglied 28 in seine Freigabestellung bewegt, in welcher sich der Drehgeber durch die Drehmomentstütze 22 abgefedert axial bewegen kann.

In dem dargestellten Ausführungsbeispiel weist das Arretierglied 28 einen Hebel 30 auf, der in einer zu der Achse der Geberwelle 10 senkrechten Ebene schwenkbar gelagert ist. Hierzu ist auf das hintere Ende des Gehäuses 20 ein Boden 32 aufgesetzt, der in einer definierten Drehstellung in Bezug auf das Gehäuse 20 dadurch fixiert ist, dass Schrauben 34 in die Wandung des Gehäuses 20 eingesetzt und in Gewindebohrungen 36 eines Mantelrings des Bodens 32 eingeschraubt werden. Der Boden 32 weist einen Durchbruch 38 auf, durch welchen frei drehbar die Geberwelle 10 hindurchragt. Auf der rückseitigen Oberfläche des Boden 32 ist der Hebel 30 des Arretiergliedes 28 mit einer Lasche 40 schwenkbar gelagert. Der Hebel 30 greift durch den Durchbruch 38 und ist in diesem Durchbruch 38 frei schwenkbar. An seinem freien Ende weist der Hebel 30 eine Verriegelungsgabel 42 auf, die in der zur Achse der Geberwelle 10 senkrechten Schwenkebene des Hebels 30 liegt. Wird der Hebel 30 gegen die Geberwelle 10 geschwenkt, so dringt die Verriegelungsgabel 42 in einen Einstich 44 der Geberwelle 10 und umgreift die Geberwelle 10 gabelförmig. In dieser Arretierposition fixiert das Arretierglied 28 somit die Geberwelle 10 und damit den gesamten Drehgeber axial in dem Gehäuse 20. Wird der Hebel 30 von der Geberwelle 10 weggeschwenkt, so kommt die Verriegelungsgabel 42 außer Eingriff von dem Einstich 44 und damit von der Geberwelle 10, so dass der Drehgeber axial frei beweglich ist und nur durch die Drehmomentstütze 22 axial abgefedert wird.

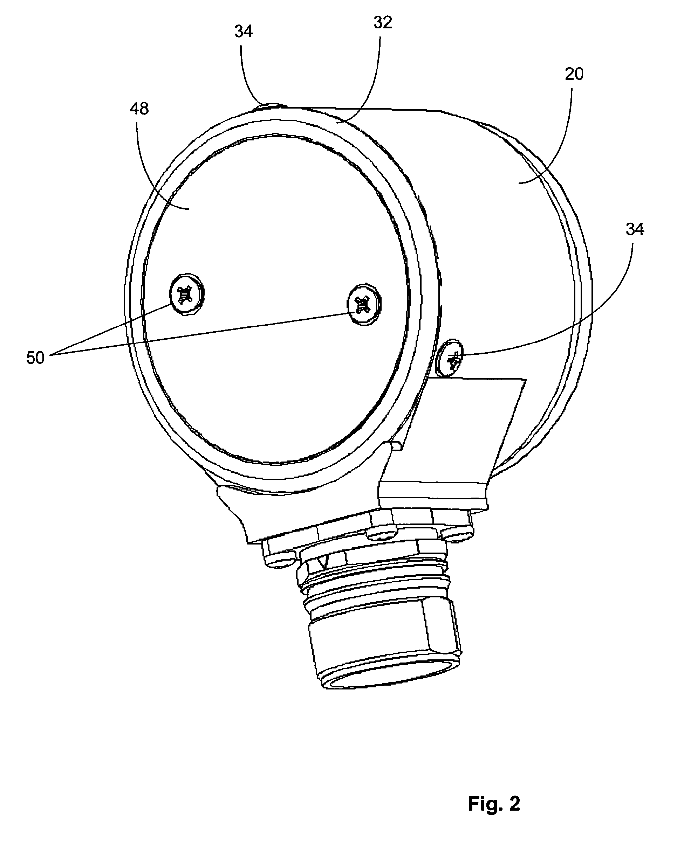

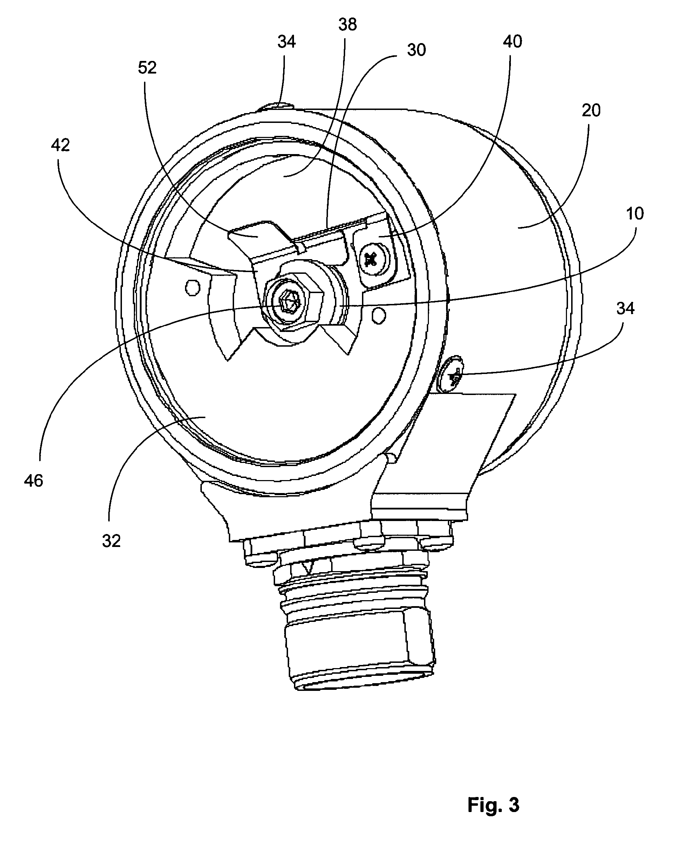

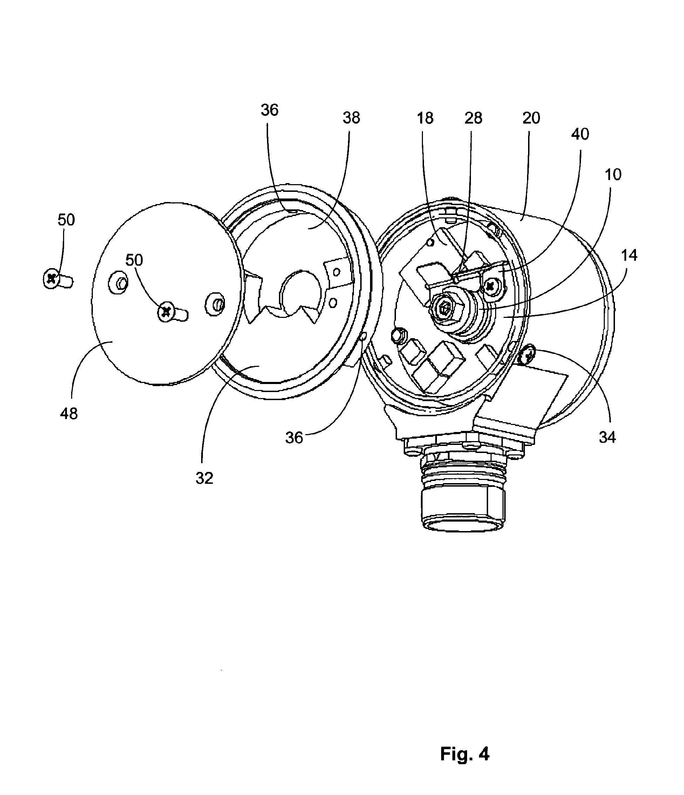

Figur 4 zeigt den Drehgeber in einer Explosionsdarstellung, wobei zur Verdeutlichung die Befestigung des Arretiergliedes 28 mittels der Lasche 40 getrennt ist, so dass die Lasche 40 den Boden 32 nicht hintergreift, wie dies im zusammengebauten Zustand der Fall ist. Dieser zusammengebaute Zustand ist in Figur 3 gezeigt. Diese Figur 3 zeigt den Zustand des Drehgebers bei der Montage an dem Motor. Der Boden 32, an welchem das Arretierglied 28 mittels der Lasche 40 befestigt ist, ist auf das Gehäuse 20 aufgesetzt und mit diesem verschraubt. Der Hebel 30 des Arretiergliedes 28 ist eingeschwenkt, so dass die Verriegelungsgabel 42 in den Einstich 44 der Geberwelle 10 eingreift. Ist der Drehgeber in dem in Figur 3 gezeigten Zustand auf die Motorwelle aufgesteckt, so wird das Gehäuse 20 mit der Anbaufläche des Motors verschraubt. Dabei kann sich die Geberwelle 10 axial auf der Motorwelle verschieben, um in der durch das Arretierglied 28 fixierten optimalen axialen Stellung in Bezug auf das Gehäuse 20 justiert zu bleiben. Nach der Befestigung des Gehäuses 20 wird die Geberwelle 10 auf der Motorwelle festgeklemmt, wozu beispielsweise eine in die Geberwelle 10 integrierte Spannzange mittels einer Spannschraube 46 betätigt wird. Nach dem Festklemmen der Geberwelle 10 auf der Motorwelle wird das Arretierglied 28 in seine Freigabeposition bewegt, d. h. der Hebel 30 wird so verschwenkt, dass die Verriegelungsgabel 42 außer Eingriff von dem Einstich 44 der Geberwelle 10 kommt. Nun kann das Gehäuse 20 durch Aufsetzen eines Deckels 48 an seiner hinteren Stirnfläche verschlossen werden. Der Deckel 48 wird mittels Schrauben 50 mit dem Boden 32 verschraubt. Der geschlossene und nun einsatzbereite Drehgeber ist in Figur 2 gezeigt.

Um sicherzustellen, dass die Geberwelle 10 und damit der gesamte Drehgeber nicht durch das Arretierglied 28 arretiert ist, wenn das Gehäuse 20 durch den Deckel 48 verschlossen ist, ist eine Sicherung vorgesehen, die gewährleistet, dass bei geschlossenem Deckel 48 in jedem Falle das Arretierglied 28 sich in der Freigabeposition befindet.

In dem in der Zeichnung dargestellten Ausführungsbeispiel ist diese Sicherung in der Weise ausgebildet, dass die Verriegelungsgabel 42 an ihrer von der Geberwelle 10 abgewandten Außenkante eine schräg ansteigende Fahne 52 aufweist. Der Deckel weist an seiner Innenfläche einen Entriegelungsvorsprung 54 auf, der bei aufgesetztem Deckel 48 durch den Durchbruch 38 des Bodens 32 hindurchgreift und an der schrägen Fahne 52 zur Anlage kommt. Beim Aufsetzen des Deckels 48 drückt der Entriegelungsvorsprung 54 gegen die schräge Fahne 52 und verschwenkt dadurch zwangsweise den Hebel 30, so dass die Verriegelungsgabel 42 aus der Eingriffsstellung in die Freigabeposition bewegt wird. Gegebenenfalls kann der Hebel 30 dabei durch eine nicht dargestellte Feder so vorgespannt sein, dass er durch die Federkraft in die Arretierposition geschwenkt wird und nur bei aufgesetztem Deckel 38 durch den Entriegelungsvorsprung 54 gegen die Federkraft in die Freigabeposition geschwenkt wird. Durch eine solche Federvorspannung ist zusätzlich sichergestellt, dass der Drehgeber durch das Arretierglied 28 immer in der arretierten Stellung im Gehäuse 20 gehalten wird, wenn das Gehäuse 20 für irgendwelche Montagearbeiten geöffnet wird.

In einer nicht dargestellten alternativen Ausführung ist die Sicherung so gestaltet, dass der Hebel 30 einen gegen den Deckel 48 gerichteten Vorsprung aufweist, der mit einem gegen den Hebel 30 gerichteten Vorsprung des Deckels 48 zusammenwirkt. In der Arretierposition, in welcher der Hebel 30 mit der Verriegelungsgabel 42 in den Einstich 44 der Geberwelle 10 eingreift, kommen die Vorsprünge des Hebels 30 und des Deckels 48 zur Deckung. Ein Aufsetzen des Deckels 48 auf das Gehäuse 20 ist daher nicht möglich, da die Vorsprünge des Hebels 30 und des Deckels 48 aufeinandertreffen und ein Aufsetzen des Deckels 48 verhindern. Erst wenn der Hebel 30 in die Freigabeposition des Arretiergliedes geschwenkt ist, treffen die Vorsprünge des Hebels 30 und des Deckels 48 beim Aufsetzen des Deckels 48 nicht mehr aufeinander und der Deckel 48 kann aufgesetzt und mittels der Schrauben 50 verschraubt werden. Die Vorsprünge verhindern dann im montierten Zustand, das sich der Hebel 30 z. B. durch Erschütterungen unbeabsichtigt verschwenkt und während des Betriebs des Drehgebers in die Arretierposition gelangt.

## Patentansprüche

1. Drehgeber zur Messung der Winkelposition einer Welle gegenüber einer Anbaufläche, wobei der Drehgeber einen Geberkörper und eine drehbar in dem Geberkörper gelagerte Geberwelle aufweist, wobei die Geberwelle starr mit der zu messenden Welle kuppelbar ist, wobei der Drehgeber drehsteif und zumindest axial federnd in dem Gehäuse gelagert ist und wobei das Gehäuse starr an der Anbaufläche anbringbar ist, **dadurch gekennzeichnet, dass** an dem Gehäuse (20, 32) ein Arretierglied (28) angeordnet ist, dass das Arretierglied (28) zwischen einer Arretierposition und einer Freigabeposition bewegbar ist, dass das Arretierglied (28) in der Arretierposition an dem Drehgeber (10, 14) angreift und diesen zumindest axial in Bezug auf das Gehäuse (20) fixiert und dass das Arretierglied (28) in der Freigabeposition außer Eingriff von dem Drehgeber (10, 14) ist und dessen federnde Beweglichkeit in dem Gehäuse (20) zulässt.

2. Drehgeber nach Anspruch 1, **dadurch gekennzeichnet, dass** die Geberwelle (10) auf die zu messende Welle aufsteckbar und auf der zu messenden Welle axial justiert befestigbar ist.

3. Drehgeber nach Anspruch 2, **dadurch gekennzeichnet, dass** die Geberwelle (10) eine Spannzange zur klemmenden Befestigung auf der zu messenden Welle aufweist.

4. Drehgeber nach einem der vorhergehenden Ansprüche, **dadurch gekennzeichnet, dass** das Arretierglied (28) in der Arretierposition in einen Einstich (44) der Geberwelle (10) eingreift und in der Freigabeposition außer Eingriff von dem Einstich (44) kommt.

5. Drehgeber nach Anspruch 4, **dadurch gekennzeichnet, dass** das Arretierglied eine Verriegelungsgabel (42) aufweist, die bei ihrem Eingriff in den Einstich (44) die Geberwelle (10) über einen Teil ihres Umfangs umgreift.

6. Drehgeber nach einem der vorhergehenden Ansprüche, **dadurch gekennzeichnet, dass** das Arretierglied (28) einen schwenkbar gelagerten Hebel (30) aufweist.

7. Drehgeber nach Anspruch 6, **dadurch gekennzeichnet, dass** der Hebel (30) in einer zur Achse der Geberwelle (10) senkrechten Ebene schwenkbar ist.

8. Drehgeber nach einem der vorhergehenden Ansprüche, **dadurch gekennzeichnet, dass** eine Sicherung vorgesehen ist, die gewährleistet, dass sich bei montiertem Drehgeber das Arretierglied (28) in der Freigabeposition befindet.

9. Drehgeber nach Anspruch 8, **dadurch gekennzeichnet, dass** die Sicherung einen an einem das Gehäuse (20) abschließenden Deckel (48) angeordneten Vorsprung aufweist, der mit dem Arretierglied (28) zusammenwirkt.

10. Drehgeber nach Anspruch 9, **dadurch gekennzeichnet, dass** das Arretierglied (28) eine schräge Fläche (52) aufweist, gegen welche der Vorsprung (54) des Deckels (48) beim Aufsetzen des Deckels (48) drückt, um das Arretierglied (28) in die Freigabeposition zu bewegen.

11. Drehgeber nach Anspruch 9, **dadurch gekennzeichnet, dass** das Arretierglied (28) einen gegen den Deckel (48) gerichteten Vorsprung aufweist, gegen welchen der Vorsprung des Deckels (48) anschlägt, wenn sich das Arretierglied (28) in der Arretierposition befindet, um das Verschließen des Gehäuses (20) durch den Deckel (48) zu blockieren.
